(19) Europäisches Patentamt
European Patent Office
Office européen des brevets

(11) **EP 4 449 096 B1**

(12) **EUROPEAN PATENT SPECIFICATION**

(45) Date of publication and mention
of the grant of the patent:
**20.05.2026 Bulletin 2026/21**

(21) Application number: **22830926.6**

(22) Date of filing: **15.12.2022**

(51) International Patent Classification (IPC):
***G01N 19/02*** *(2006.01)*

(52) Cooperative Patent Classification (CPC):
**G01N 19/02**

(86) International application number:
**PCT/GB2022/053248**

(87) International publication number:
**WO 2023/111573 (22.06.2023 Gazette 2023/25)**

(54) **METHOD OF DETERMINING A GRIP COEFFICIENT**

VERFAHREN ZUR BESTIMMUNG EINES GREIFKOEFFIZIENTEN

PROCÉDÉ DE DÉTERMINATION D'UN COEFFICIENT DE PRISE

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**

(30) Priority: **16.12.2021 GB 202118328**

(43) Date of publication of application:
**23.10.2024 Bulletin 2024/43**

(73) Proprietor: **Plexus Holdings, PLC.
Dyce, Aberdeen AB21 0HW (GB)**

(72) Inventors:
• **HENDRIE, Craig**
**Aberdeen AB15 8GF (GB)**
• **HARRALD, Brent**
**Aberdeen AB15 9PZ (GB)**
• **HAO, Jinde**
**Aberdeen AB15 8GF (GB)**

(74) Representative: **Dummett Copp LLP
25 The Square
Martlesham Heath
Ipswich IP5 3SL (GB)**

(56) References cited:
• **VAN BILDERBEEK BEN: "LEAK-PROOF
WELLHEADS -A MATTER OF CONTROL
Background", 12 February 2020 (2020-02-12),
pages 1 - 14, XP93027651, Retrieved from the
Internet <URL:https://www.plexusplc.com/
wp-content/uploads/2020/02/
Leak-Proof-Wellheads-A-Matter-of-Con
trol-12.2.20.pdf> [retrieved on 20230228]**
• **HARRALD BRENT: "Friction Grip in Wellheads:
An Innovative Approach to Load Support &
Sealing", 1 December 2009 (2009-12-01), pages 1
- 56, XP093027626, Retrieved from the Internet
<URL:https://hobbydocbox.com/
Art_and_Technology/
74054572-Friction-grip-in-wellheads-an-innovati
ve-approach-to-load-support-sealing.html>
[retrieved on 20230228]**
• **VAN BILDERBEEK BEN: "LEAK-PROOF
WELLHEADS -A MATTER OF CONTROL
Background", 12 February 2020 (2020-02-12),
pages 1 - 14, XP093027651, Retrieved from the
Internet <URL:https://www.plexusplc.com/
wp-content/uploads/2020/02/
Leak-Proof-Wellheads-A-Matter-of-Con
trol-12.2.20.pdf> [retrieved on 20230228]**

**Description**

FIELD OF THE INVENTION

The present invention relates to the field of materials testing to determine a grip coefficient. In particular, this invention relates to a method of determining a grip coefficient in a wellhead system.

BACKGROUND TO THE INVENTION

In wellhead systems it is often necessary to support the load of an inner tubular member that is disposed within an outer tubular member. In particular, in oil and gas wells, it is conventional to locate a number of concentric tubes or casings in a well. An outmost casing is held in a fixed position, and a plurality of inner casings are disposed through and within the outer casing. Each inner casing is supported by a respective hanger.

Traditionally the inner casings are supported using casing hangers which may include inter-engaging shoulders on the inner and outer casing. Such casing hangers are fixed in position on each casing. Systems which make it easy, simple and reliable to land and connect hangers for the casings are very desirable. Furthermore, in some situations, it can be advantageous to be able to adjust the position of one casing relative to another casing.

It is known to provide a clamping system that permits an inner casing to be clamped in a desired position within an outer casing, and then to subsequently unclamp the casings. These systems are reliable and simple and allow the hanger for the casing to be landed and connected. Such a system may also allow for a change in their relative positions and then re-clamp the casings in a new relative position. In these systems an inner casing or tubing hanger is supported by applying a generally radial force to an outer member or the outer casing to elastically squeeze the outer member/casing around the inner casing or hanger. Friction at this interface then supports the inner casing.

In these systems a reliable seal is provided around the inner casing/hanger and, in addition, the inner casing is locked down and upwards movement of the inner casing is prevented. Accordingly, such systems releasably secure the hanger in place and allow the hanger to be released and removed and/or to be secured/unsecured for whatever reason.

These clamping systems are friction grip wellhead systems which use and rely on the frictional grip to secure components in the bore of concentric casings/tubular members.

The load capacity of the clamping system is therefore a function of the contact stress at the interface between the casings.

It is also necessary to consider the frictional forces at the interface between the inner casing and the outer casing. A grip coefficient is a physical constant used to relate the load capacity of the clamping system to the contact stress at this friction interface. If a friction interface consists of two smooth surfaces in contact, then the grip coefficient is mathematically identical to the static coefficient of friction.

In a large wellhead system, however, the surfaces at the interface between the inner casing and the outer casing are not ideal smooth surfaces. The grip coefficient will therefore depend on a number of factors including the materials of the inner and outer casings, any surface treatments applied to the casings, and the geometry and profile of the surfaces of the casings at the interface.

Against this background it is desirable to provide a method of determining the grip coefficient at such a casing interface.

The publication "Friction Grip in Wellheads: An Innovative Approach to Load Support & Sealing", Brent Harrald, December 2009, discloses a method and apparatus for such purposes.

It is an aim of the present invention to overcome at least one problem associated with the prior art whether referred to herein or otherwise.

SUMMARY OF THE INVENTION

According to a first aspect of the present invention there is provided a method of determining a grip coefficient at an interface between an inner tubular member and an outer tubular member in a wellhead system, the wellhead system comprising a clamping arrangement comprising a collar having an externally tapered surface, the arrangement also including an annular component with an internally tapered surface, the collar and the annular component being relatively moveable between a first position in which the tapered surface of the annular component exerts no radial force on the collar and a second position in which the tapered surface of the annular component exerts sufficient radial force to distort the collar inwardly in order to grip an inner tubular member within a gripping surface and to support a load of the inner tubular member, the inner tubular member having an outer surface including a ridged profile, and the method comprising:

  (i) forming a test block having opposite side surfaces including a ridged profile representative of the outer surface of the inner tubular member, the test block being made from the same material as at least an outer surface of the inner tubular member;
  (ii) gripping the test block between two gripping plates configured to move linearly towards each other and away from each other by applying a gripping force normal to the side surfaces of the test block disposed between the gripping plates so as to form an interface between each of the side surfaces and a test face of a respective one of the gripping plates, the test face being made from the same material as at least an inner surface of the gripping surface;

(iii) providing a press member at least partially disposed between the two gripping plates and configured to move linearly along an axis perpendicular to the axis of linear movement of the gripping plates and applying a gradually increasing load to the test block in a direction parallel to a plane of the interface;
(iv) providing a sensor and continuously monitoring relative movement between the test block and the gripping plate at the interfaces;
(v) determining the applied load at which slip between the test block and the gripping plates occurs; and
(vi) determining the grip coefficient by calculating the ratio of the applied load to the gripping force at the time slip occurs;

wherein the method further comprises:

- mounting the press member on an anchor block and securing the anchor block to an anchor plate wherein the anchor block and press member locate at a first end of the gripping plates and the anchor plate is located at a second opposing end of the gripping plates;
- securing the anchor block to the anchor plate by anchor rods; and
- mounting the anchor block and the anchor plate on rails to aid the relative movement of the anchor block and the anchor plate during an initial set up; and
- fixing the anchor block and the anchor plate to each other to prevent movement of the press member away from the test block during testing.

The gripping surface may be provided on an inner surface of the collar. The gripping interface may be formed between the inner surface of the collar and the outer surface of the inner tubular member.

The gripping surface may be provided on an inner surface of an outer tubular member. The outer tubular member may be located between the outer surface of the inner tubular member and the inner surface of the collar. The gripping interface may be formed between the inner surface of the outer tubular member and the outer surface of the inner tubular member.

Preferably the inner tubular member is arranged to be suspended from the gripping surface and for the inner tubular member to extend downwardly within an outer tubular member.

The test block is preferably substantially cuboidal.

Preferably the method further comprises continuously monitoring the gripping force at the interfaces. Preferably the method further comprises measuring any variation in the gripping force over the areas of each of the side surfaces of the test block.

Preferably the method further comprises continuously monitoring the applied load. Preferably the method further comprises measuring a distribution of the applied load over a surface of the test block.

Preferably a contact stress at the interfaces due to the applied gripping force is between 60 MPa and 175 MPa, more preferably between 68 MPa and 173 MPa.

Preferably the applied load at which slip occurs is the smallest applied load at which one of these conditions is satisfied:

(i) the applied load reaches a maximum and cannot be increased due to continual slip at the interface under increased load;
(ii) the total relative movement at the interface is at least the same as half the pitch of ridges of the ridged profile of the side surfaces of the test block; and
(iii) relative movement at the interface occurs suddenly and in an increment greater than a pre-determined threshold value.

Preferably a plurality of tests are conducted by repeating the method steps (i) - (vi) for a plurality of test blocks, each of the plurality of test blocks being made of the same material and the side surfaces of each of the test blocks having the same ridged profile and having identical surface treatment. Preferably the method steps (i) - (vi) are repeated for at least ten test blocks. More preferably the method steps (i) - (vi) are repeated for at least twenty test blocks.

Preferably a single grip coefficient is determined from the calculated ratios of the applied load to the gripping force at the time slip occurs for all of the tests. In some embodiments the grip coefficient may be determined by calculating the mean of the calculated ratios of the applied load to the gripping force at the time slip occurs for all of the tests, minus two standard deviations. In other embodiments the grip coefficient may be the minimum of the calculated ratios of the applied load to the gripping force at the time slip occurs for all of the tests.

Preferably the number of repeat tests that are conducted is determined by a statistical reliability of the calculated grip coefficient. Preferably the statistical reliability of the calculated grip coefficient is a probability of 97.5% that any given calculated ratio of the applied load to the gripping force at the time slip occurs from any of the tests is greater than the determined grip coefficient, less an allowable error value.

Preferably the method further comprises:

- applying a first gripping force such that a contact stress at the interfaces is within a first range of contact stresses;
- determining a first grip coefficient for the first gripping force;
- applying a second gripping force such that a contact stress at the interfaces is within a second range of contact stresses; and
- determining a second grip coefficient for the second gripping force.

The method may be used to calculate a first grip coefficient for a first range of contact stresses applied to the interface, and a second grip coefficient for a second range of contact stresses applied to the interface, by conducting the test method for a plurality of different contact stresses within the first range of contact stresses and a plurality of different contact stresses within the second range of contact stresses. In yet further embodiments, it may be beneficial to calculate more than two grip coefficients over more than two ranges of applied contact stress.

Preferably the collar and the annular component are relatively axially moveable between a first position in which the tapered surface of the annular component exerts no radial force on the collar and a second position in which the tapered surface of the annular component exerts sufficient radial force to distort the collar inwardly in order to grip an inner tubular member within an outer tubular member to support a load of the inner tubular member.

Preferably the annular component comprises a compression ring.

Preferably the collar comprises a compression collar.

The compression collar may have an axially extending groove provided on the outer periphery and preferably the compression collar has a plurality of axially extending grooves provided radially around the outer periphery.

Preferably the arrangement includes a sleeve which is arranged, in use, to locate between an inner surface of the collar and outer surface of the inner tubular member. Preferably the sleeve comprises a compression sleeve.

Preferably the arrangement includes movement means for moving the annular component relative to the collar. Preferably the movement means comprises hydraulic movement means.

The clamping arrangement may comprise hydraulic fluid introduction means to introduce hydraulic fluid into the chamber in order to urge the annular component relative to the collar.

The movement means may comprise a piston. Preferably the movement means comprises a plurality of pistons. Preferably the pistons are arranged radially around the annular component.

The clamping arrangement may comprise locking means to lock the annular component in the second position. The locking means may comprise a locking member which engages in a locking recess. Preferably the locking means comprises a plurality of locking members.

The clamping arrangement may comprise return movement means to move the annular component from the second position towards the first position. In particular, the return movement means may aid the release of the clamping force from between the annular component and the collar.

Preferably the return movement means comprises a chamber which may be pressurised to urge the annular component relative to (away from) the collar.

The movement means may comprise a piston. Preferably the movement means comprises a plurality of pistons. Preferably the pistons are arranged radially around the annular component.

The gripping surface may be provided on an inner surface of the collar and the gripping interface is formed between the inner surface of the collar and the outer surface of the inner tubular member.

The gripping surface may be provided on an inner surface of an outer tubular member, the outer tubular member being located between the outer surface of the inner tubular member and the inner surface of the collar and wherein the gripping interface is formed between the inner surface of the outer tubular member and the outer surface of the inner tubular member.

According to a second aspect of the present invention there is provided an apparatus to determine a grip coefficient at an interface between an inner tubular member and a gripping surface in a wellhead system, the wellhead system comprising a clamping arrangement comprising a collar having an externally tapered surface, the arrangement also including an annular component with an internally tapered surface, the collar and the annular component being relatively moveable between a first position in which the tapered surface of the annular component exerts no radial force on the collar and a second position in which the tapered surface of the annular component exerts sufficient radial force to distort the collar inwardly in order to grip the inner tubular member within the gripping surface and to support a load of the inner tubular member, the inner tubular member having an outer surface including a ridged profile, and the apparatus comprising:

- a test block having opposite side surfaces including a ridged profile representative of the outer surface of the inner tubular member, the test block being made from the same material as at least an outer surface of the inner tubular member;

- a pair of gripping plates configured to move linearly towards each other and away from each other to apply a gripping force normal to the side surfaces of the test block disposed between the gripping plates so as to form an interface between each of the side surfaces and a test face of a respective one of the gripping plates, the test face being made from the same material as at least an inner surface of the gripping surface;

- a press member configured to move linearly along an axis perpendicular to the axis of linear movement of the gripping plates, so as, in use, to apply a gradually increasing load in a direction parallel to a plane of the interface to an end surface of said test block disposed between the gripping plates;

- a sensor arranged to continuously monitor relative movement between said test block and the gripping plates at an interface between one of said side surfaces of the test block and a face of one of the gripping plates;
- means to determine the applied load at which slip between the test block and the gripping plates occurs;
- means to determine the grip coefficient by calculating the ratio of the applied load to the gripping force at the time slip occurs;
- the press member is mounted on an anchor block and the anchor block is secured to an anchor plate wherein the anchor block and press member locate at a first end of the gripping plates and the anchor plate is located at a second opposing end of the gripping plates;
- the anchor block is secured to the anchor plate by anchor rods; and
- the anchor block and the anchor plate are mounted on rails to aid the relative movement of the anchor block and the anchor plate during an initial set up and wherein the anchor block and the anchor plate are fixed to each other to prevent movement of the press member away from the test block during testing.

Preferably the press member is at least partially disposed between the two gripping plates.

In some embodiments one of the gripping plates is moveable and the other one of the gripping plates remains stationary. In other embodiments both of the gripping plates may be moveable.

The apparatus preferably comprises a suitable mechanism and motor configured to drive movement of one or both of the gripping plates. The movement mechanism may comprise a hydraulic mechanism. The hydraulic mechanism may comprise one or more hydraulic tensioners. The hydraulic mechanism may comprise four (linked) hydraulic tensioners which may be located uniformly (evenly) around the gripping plates.

The or each hydraulic tensioner may be mounted on the first platen and comprise a rod which extends to and is secured to the second platen. Preferably the rods act as alignment rods.

Preferably each of the gripping plates comprises a planar test face configured, in use, to contact a respective one of said side surfaces of the test block.

Preferably each gripping plate is mounted to a platen of the apparatus.

Preferably the press member is configured to apply the load to the test block in a central position on the end surface, mid-way between the pair of gripping plates.

The apparatus preferably further comprises a sensor arranged to continuously monitor a contact stress at each of the interfaces due to the gripping force applied by the gripping plates. The sensor is preferably configured to measure any variation in contact stress across the area of the interface.

The apparatus preferably further comprises a sensor arranged to continuously monitor the load applied to the test block by the press member. The sensor is preferably configured to measure the distribution of the applied load over the end surface of the test block.

The apparatus preferably further comprises means to record the data from (i) the sensor arranged to continuously monitor relative movement between said test block and the gripping plate, (ii) the sensor arranged to continuously monitor a contact stress at each of the interfaces, and (iii) the sensor arranged to continuously monitor the load applied to the test block by the press member.

The apparatus preferably further comprises a mechanism configured to drive movement of the pair of gripping plates so as to apply the gripping force to the test block, such that a contact stress at the interface due to the applied gripping force is between 60 MPa and 175 MPa. More preferably the applied gripping force is between 68 MPa and 173 MPa.

In some embodiments an end region of the press member is configured to extend over an edge of the test block, said edge bounding the end surface of the test block.

Preferably the apparatus comprises a first platen and a second platen which are arranged to be moved relative to each other to apply the gripping force to the side surfaces of the test block. Preferably the first gripping plate is mounted to the first platen and the second gripping plate is mounted to the second platen. Preferably the first gripping plate is mounted with a recess provided on an inner surface of the first platen and the second gripping plate is mounted on an inner surface of the second platen.

Preferably the apparatus comprises alignment means to align the gripping plates as they are moved towards each other and/or away from each other. Preferably the alignment means comprise an alignment rod and preferably comprises a plurality of alignment rods.

The press member may be mounted on an anchor block. The anchor block may be secured to an anchor plate wherein the anchor block (and press member) locates at a first end of the gripping plates (and associated platens) and the anchor plate is located at a second opposing end of the gripping plates (and associated platens). The anchor block may be secured to the anchor plate by anchor rods. The anchor block and/or the anchor plate may be mounted on rails to aid the relative movement of the anchor block/anchor plate during an initial set up. The anchor block and the anchor plate may be fixed to each other to prevent movement of the press member away from the test block during testing.

The present invention may comprise a method of constructing and/or designing a wellhead comprising:

determining a grip coefficient at an interface between an inner tubular member and a gripping surface in the wellhead in accordance with the first aspect of the present invention;
constructing the wellhead by selecting a combination of a clamping arrangement and inner tubular member to provide said grip coefficient.

The method may comprise selecting a material and dimensions for:

the collar;
the annular component;
the inner tubular member; and
the gripping surface.

BRIEF DESCRIPTION OF THE DRAWINGS

The invention will now be further described by way of example only and with reference to the accompanying drawings, in which:

Figure 1 is a sectional view of a first clamping system in a wellhead system;

Figures 2a and 2b are schematic diagrams of the first clamping system of Figure 1 in a released and an activated configuration, respectively;

Figure 3 is a sectional view of a second clamping system in a wellhead system;

Figures 4a and 4b are schematic diagrams of the second clamping system of Figure 3 in a released and an activated configuration, respectively;

Figure 5 is a plan view of testing rig of the present invention;

Figure 6 shows a test block according to the present invention

Figure 7a is a schematic view of a test block located between two test plate members prior to testing;

Figure 7b is a schematic view of a test block located between two test plate members during testing

Figure 8a shows a testing rig of the present invention; and

Figure 8b shows a testing rig of the present invention with one platen and two hydraulic tensioners removed.

DESCRIPTION OF THE PREFERRED EMBODIMENTS

A wellhead system 2 comprises a plurality of interacting components in a wellhead. The wellhead system typically comprises casing or tubing heads, hangers, annular seals and conductor housings (in subsea wellhead systems). Casing heads are configured to suspend and seal a casing string. Casing strings and production tubing may be referred to more generally as tubulars 4. Casing strings or tubulars 4 extend through a wellbore and are arranged concentrically, with smaller diameter casing strings or tubulars 4 being mounted and supported within larger diameter casing strings or tubulars 4. In the following description, the term tubular member 6 is also used to encompass a hanger 8 used to support a casing string 4.

A clamping system 10 may be used to grip an upper end of an inner tubular 4 with the inner tubular 4 then extending downwardly in an outer tubular 4 so as to support the load of the inner tubular 4 and effect sealing between the inner and outer tubulars 4. As mentioned above, the clamping system 10 ,110, 210 comprises a friction grip system and specifically a friction grip wellhead system. Such a system uses (and relies solely upon) a frictional grip to secure components in a bore of a concentric tubular member. This system enables a tubular member to be easily and reliably landed and connected within the wellhead system and allows the inner tubular member to be released and re-secured or removed for a variety of reasons. Furthermore, this system enables the gripped tubular member to be locked down with the wellhead system. The frictional grip prevents the inner tubular member from moving downwardly or upwardly. Finally, this system also provides a reliable and effective seal around the inner tubular member.

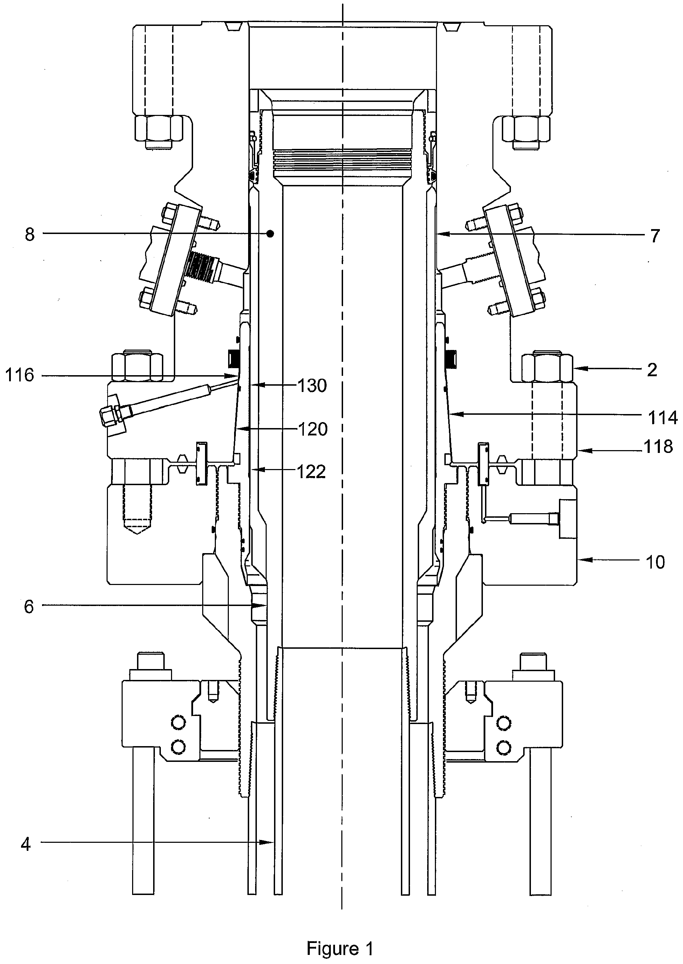

Figures 1 to 4 show two types of clamping systems 110, 210 employed in a wellhead system 2. These clamping systems 110, 210 use axial movement of one or more components over a taper to compress inner components radially inwards within the elastic range of the compressed materials to "grip" inner components. In particular, the clamping systems 110, 210 may be used to apply a radial force to an outer gripping member (outer casing, conductor, collar) to directly or indirectly grip an inner tubular or inner casing 4. Contact stresses created by the gripping action support the load of the inner tubular 4 through a friction interface 130, 230. The gripping action may also energise annular seals. As mentioned above, this creates an effective seal and also locks down the inner casing 4 whilst also enable the inner casing to be easily released and removed.

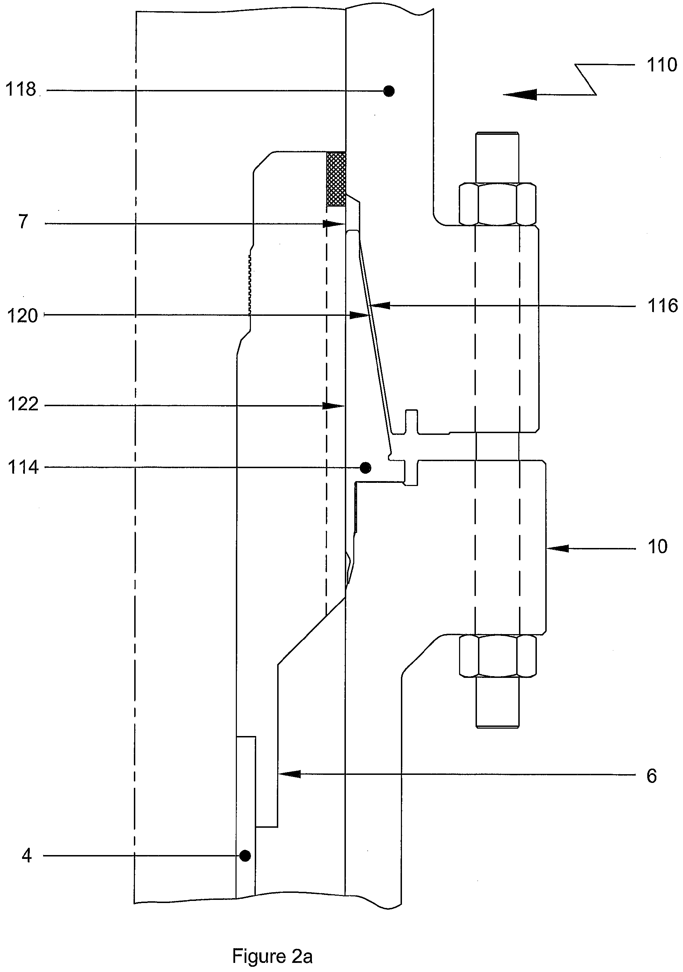

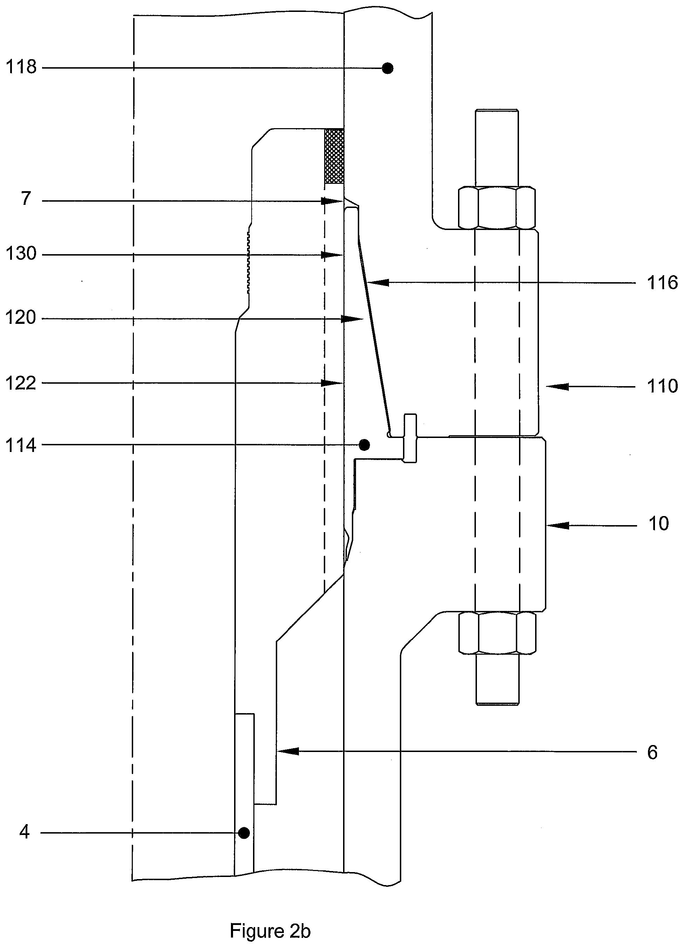

In a first clamping system or first clamping arrangement 110, shown in Figures 1 and 2, the clamping system 110 is disposed at an interface between two casing or tubing heads or spools. The first clamping system 110 comprises an annular collar element 114 having a tapered or ramped outer surface 116. An inner tubular member 6 is disposed within and through the collar element 114. The first clamping system 110 also includes an activating spool 118 that is arranged to move axially over at least a section of the tapered surface 116 of the collar element 114. The activating spool 118 is therefore disposed radially outside of the collar element 114. The activating spool 118 comprises a radially inner surface 120 that is tapered, and that engages with the outer tapered surface 116 of the collar element 114. The first clamping system 110 is activated by moving the activating spool 118 (or first casing or tubing head) axially over the collar element 114 in a first direction which causes the collar element 114 to deflect radially inwardly so as to grip the inner tubular member 4. In this clamping system 110 an inner surface 122 (the gripping surface) of the collar element 114 is in contact with an outer surface 7 of the inner tubular member 6. To release the inner tubular member 6, the activating spool 118 is moved in a second, opposite direction. The activating spool 118 no longer applies a compression force to the collar element 114, and the collar element 114 elastically returns to its original size. The inner tubular member 6 is then free to move through the collar element 114, for removal purposes, repositioning and the like. Figure 2a shows the first clamping arrangement 110 in its activated configuration and Figure 2b shows the first clamping arrangement 110 in its released configuration.

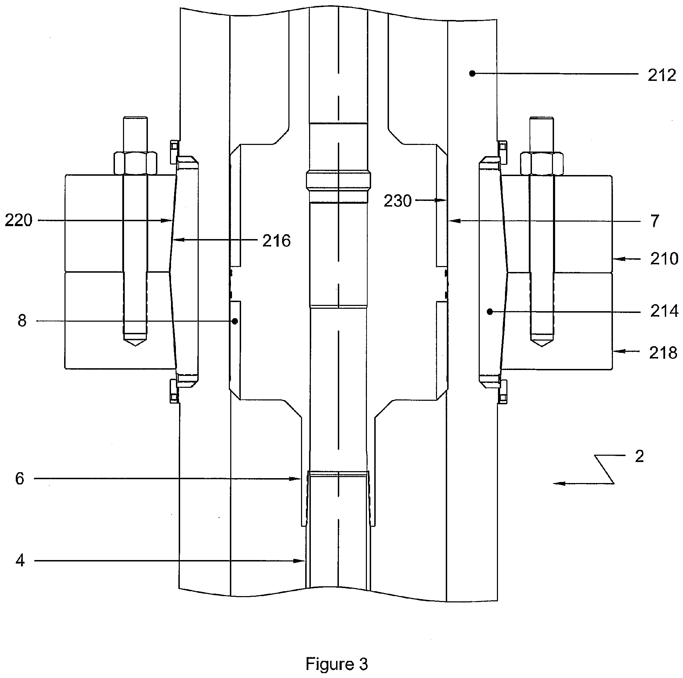

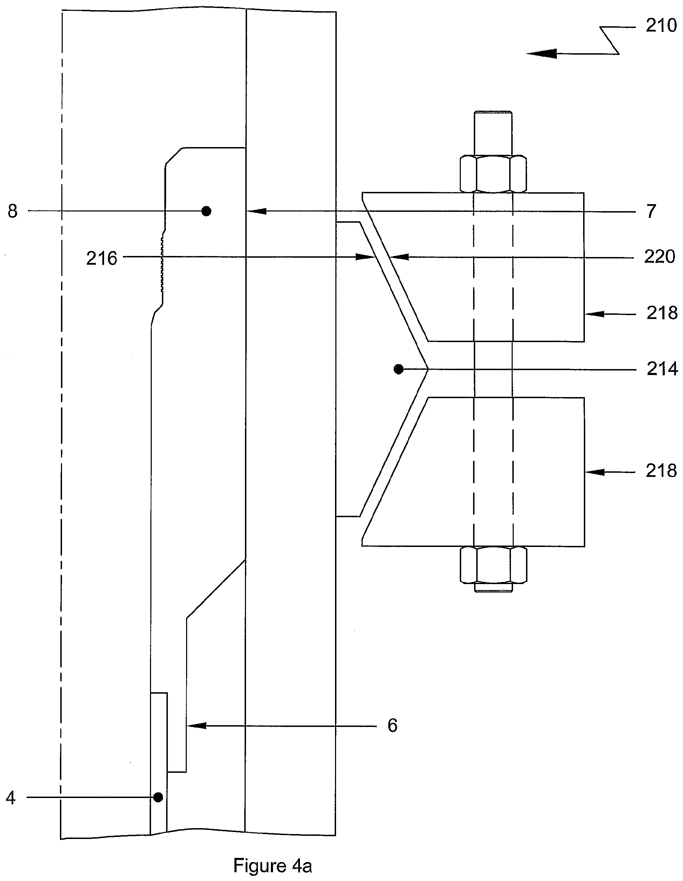

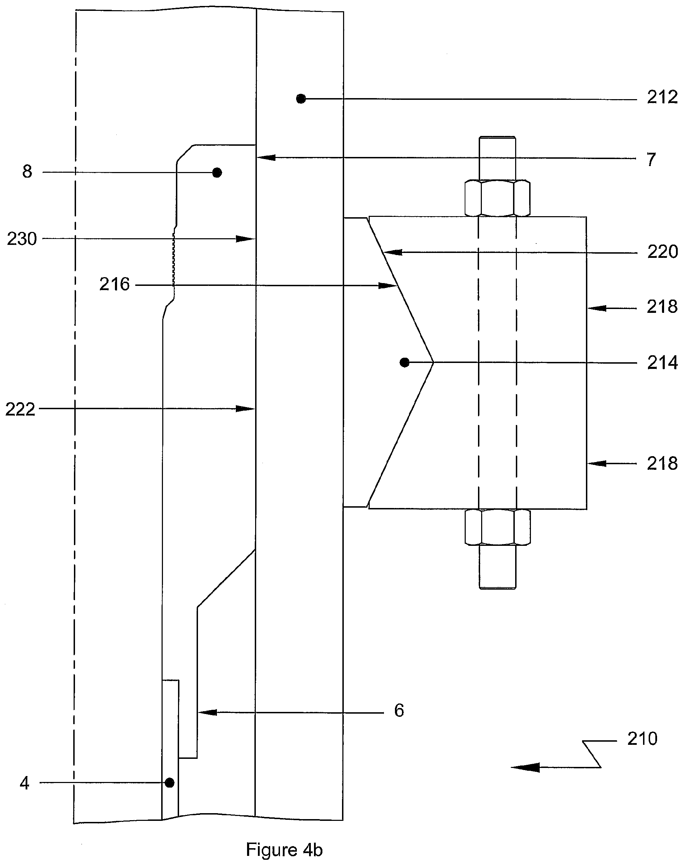

A second clamping system or second clamping arrangement 210, shown in Figures 3 and 4, is disposed or situated away from an end of a casing or tubing head. The second clamping system 210 comprises an annular compression collar 214 having a tapered or ramped outer surface 216. A housing body or conductor housing 212 is disposed within and through the compression collar 214. An inner tubular member 6 is disposed and supported within the housing body or conductor housing 212. The second clamping system 210 also includes at least one compression ring 218 disposed radially outside of the compression collar 214. The compression ring 218 comprises a radially inner surface 220 that is tapered, and that engages with the outer tapered surface 216 of the compression collar 214. The second clamping system 210 is activated by moving the compression ring 218 axially over the compression collar 214 in a first direction which causes the compression collar 214 to deflect radially inwardly. The compression collar 214 applies a radial force to the housing body or conductor housing 212 so as to elastically inwardly compress the housing body or conductor housing 212 and an inner surface (the gripping surface) of the outer tubular member/conductor housing 212 grips the inner tubular member 6. To release the inner tubular member 6, the compression ring 218 is moved in a second, opposite direction. The compression ring 218 no longer applies a compression force to the compression collar 214 and the housing body or conductor housing 212. The inner tubular member 6 is then free to move through the housing body or conductor housing 212, for removal, repositioning and the like. Figure 4a shows the second clamping arrangement 210 in its activated configuration and Figure 4b shows the second clamping arrangement 210 in its released configuration.

It will be appreciated from the foregoing description that, although the components of the first and second clamping system 110, 210 are different, their principle of operation and the resulting clamping action is substantially the same. Each clamping system or clamping arrangement 110, 210 comprises a collar 114, 214 having an externally tapered surface 116, 216. Each clamping system or arrangement 110, 210 also includes an annular component 118, 218 with an internally tapered surface 120, 220, the collar 114, 214 and the annular component 118, 218 being relatively axially moveable between a first position in which the tapered surface 120, 220 of the annular component 118, 218 exerts no radial force on the collar 114, 214 and a second position in which the tapered surface 120, 220 of the annular component 118, 218 exerts sufficient radial force to distort the collar 114, 214 inwardly in order to grip an inner tubular member 6 within a gripping surface (e.g. provided on an outer tubular member 212/collar 114) to support a load of the inner tubular member 6.

It will be appreciated that a load acting on the inner tubular member 6 is generally in an axial direction, whilst the force applied to the inner tubular member 6 by the clamping system 110, 210 is in a generally radial direction. Accordingly, the friction interface 130, 230 is defined between the outer surface 7 of the inner tubular member 6 and an inner surface of the clamping system 110, 210 (the inner surface 122 (gripping surface) of the collar element 114 in the first clamping system 110 and an inner surface 222 (gripping surface) of the housing body or conductor housing 212 in the second clamping system 210).

In order to determine a load capacity of the clamping system 110, 210, that is, the maximum load that may be safely supported by the clamping system 110, 210, it is necessary to determine the radial compression force (contact stress) that is applied to the friction interface 130, 230 by the clamping system 110, 210 and a grip coefficient ($\Phi$) of that interface 130, 230. The grip coefficient ($\Phi$) is a ratio of a minimum axial load ($F_s$) capable of causing slip at the friction interface to the radial force ($F_n$) applied to the friction interface 130, 230. The axial load ($F_s$) is applied in a direction generally parallel to the friction interface 130, 230 and the radial force ($F_n$) is applied in a direction generally perpendicular to the friction interface 130, 230.

As shown in the illustrated embodiments, the clamping systems 110, 210 are often used to grip a hanger 8 that supports a casing string 4. In many wellhead systems an outer surface 7 of the hanger 8 is not perfectly smooth. In many wellhead systems the outer surface 7 of the hanger 8 has a toothed or ridged profile. The geometry of the toothed or ridged surface (including tooth/ridge pitch, tooth/ridge height and tooth/ridge angle) will have an effect on both the contact stress at the friction interface 130, 230 and the grip coefficient ($\Phi$).

The exact profile of the outer surface 7 of the inner tubular member 6 (for example a casing or tubular hanger 8) must therefore be considered when determining the grip coefficient ($\Phi$). Furthermore, any surface

treatments or surface coatings applied to the outer surface 7 of the inner tubular member 6 must also be taken into account. All of these factors will vary for each individual inner tubular member 6 within a wellhead system 2. Additionally, there will be manufacturing tolerances and ranges within manufacturing specifications that will introduce additional variability.

It will be appreciated that it is not possible to test the wellhead system 2 itself to determine the grip coefficient (Φ) for a particular set of components. Load capacities of a wellhead system 2 are in the millions of kilograms and full-scale testing would be too costly, too difficult and unsafe. The present invention therefore provides a methodology to determine the grip coefficient (Φ) empirically using a test rig.

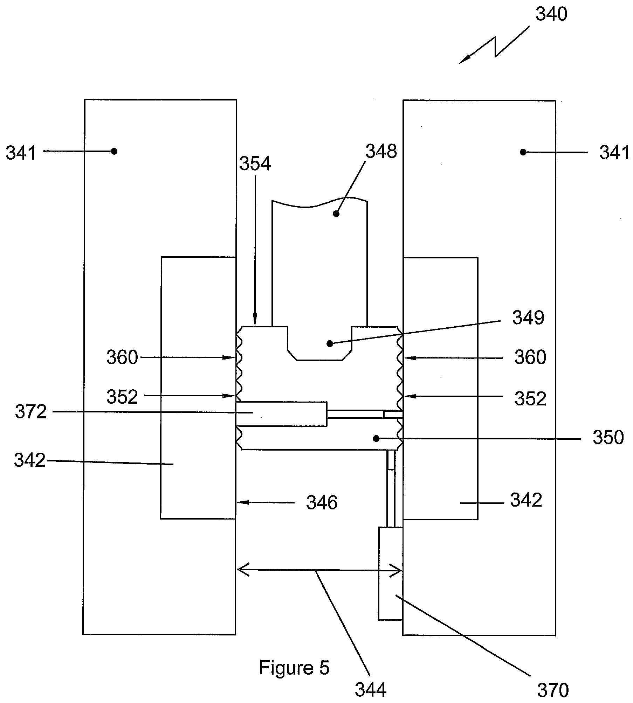

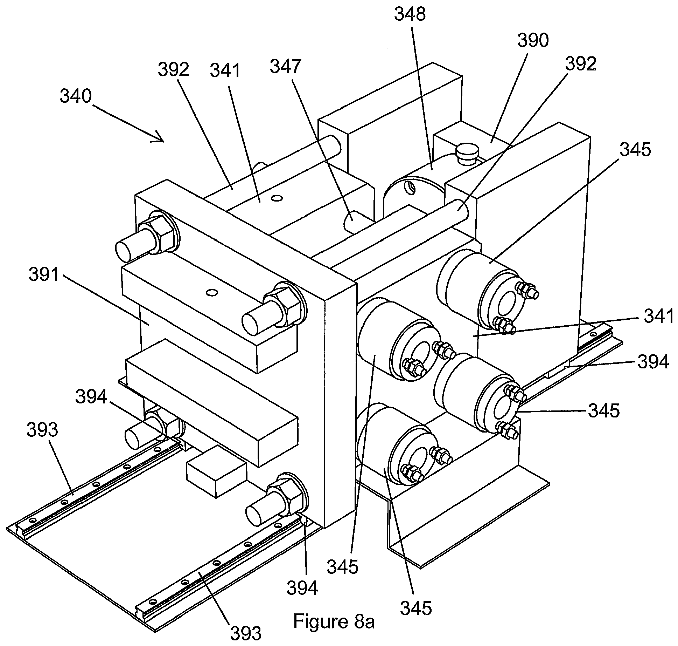

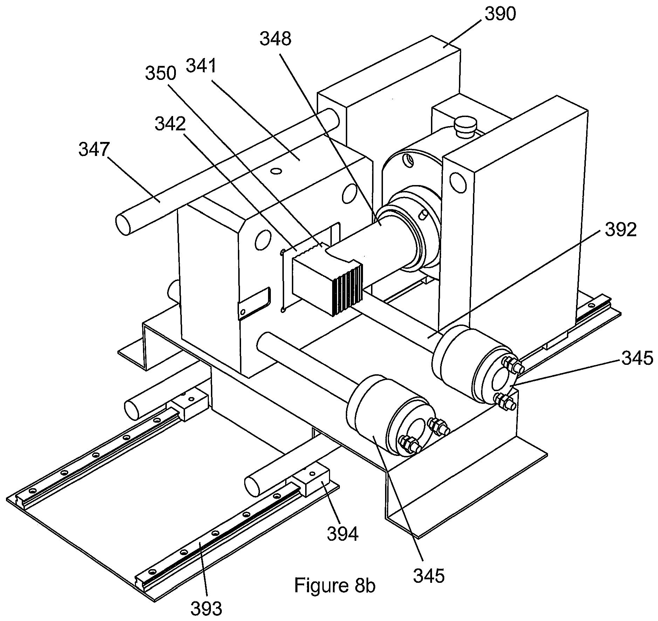

A preferred embodiment of a test rig 340 according to the present invention is shown in Figure 5, Figure 8a and Figure 8b. The test rig 340 comprises a pair of opposing gripping plate mounting blocks or platens 341 for mounting gripping plates 342. The platens 341 are arranged to move linearly towards each other (such that a gap 344 between the platens 341/gripping plates 342 decreases) and away from each other (such that the gap 344 between the platens 341/gripping plates 342 increases). It will be understood that in some embodiments both platens 341 may move, so as to increase or decrease the gap 344 between them, while in other embodiments only one of the platens 341 may move while the other one of the platens 342 remains stationary. The test rig 340 further comprises a suitable mechanism and motor to drive the movement of the platen or platens 341. In the preferred embodiment, the mechanism comprises a hydraulic mechanism comprising four linked hydraulic tensioners 345.

The four hydraulic tensioners 345 are mounted evenly/uniformly around the gripping plates 342 so as to provide an even (and linear) force. In particular, the four tensioners 345 are effectively concentric with a central axis of movement of the two gripping plates 342. Each hydraulic tensioner includes an alignment rod 347 which restrains and maintains the movement and force produced by the hydraulic tensioners 345 being linearly across the interface being tested, i.e. the two platens 341 are constrained to move in a parallel configuration towards each other.

Each of the first and second gripping plates 342 of the pair of plates has a test face 346. The test faces 346 are opposite each other and face each other across the gap 344. Each of the test faces 346 is preferably planar, and the test faces 346 preferably lie in planes parallel to each other.

The test rig 340 also comprises a press member or ram 348. The ram 348 is disposed at least partially in the gap 344 between the platens 342. The ram 348 is configured to move linearly in a direction parallel to the planes of the test faces 346 of the platens 342.

The ram 348 is mounted on an anchor block 390 located at one end pf the test rig 340. Anchor rods 392 connect the anchor block 390 to an anchor plate 391 located at the other end of the test rig 340 such that the test block 350 is located between the anchor block 390 and the anchor plate 391.

The anchor block 390 and the anchor plate 391 are mounted on rails 393 through bearings 394. The combination of the rails 393, bearings 394 and the anchor rods constrain and enable the anchor block 390 and the anchor plate 391 to move freely, directly towards and away from each other.

During use of the test rig 340 a test piece or test block 350 is disposed in the gap 344 between the platens 341. The test block 350 is held and supported by the gripping plates 342, with the test faces 346 in contact with opposite first and second side surfaces 352 of the test block 350. In particular, a gripping force is applied to the test block 350 by moving the platens 341 towards each other to grip the test block 350 between the gripping plates 342. The gripping force applied to the test block 350 by the gripping plates 342 is, therefore, applied in a direction substantially perpendicular to the plane of the test faces 346 of the gripping plates 342.

The material of each of the test faces 346 of the gripping plates 342 is preferably the same. Furthermore, the material from which both of the test faces 346 is made is preferably identical to the material of the inner surface 122, 222 of the clamping system 110, 210 (forming one surface of the friction interface 130, 230 described above).

As shown in Figure 8b, the test block 350 is held and mounted in the rig such that the force produced by the ram 348 is perpendicular to the teeth on the gripping plates 342.

This orientation replicates the orientation of the teeth within an actual wellhead system whereby the teeth would be arranged horizontally with the force largely caused by the weight of the inner tubular member being perpendicular to the orientation of the teeth.

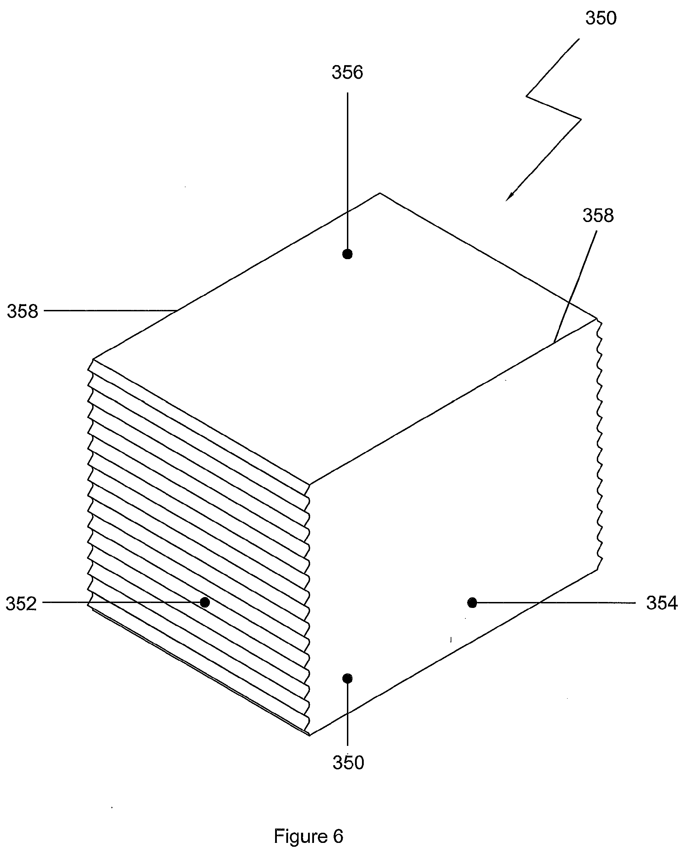

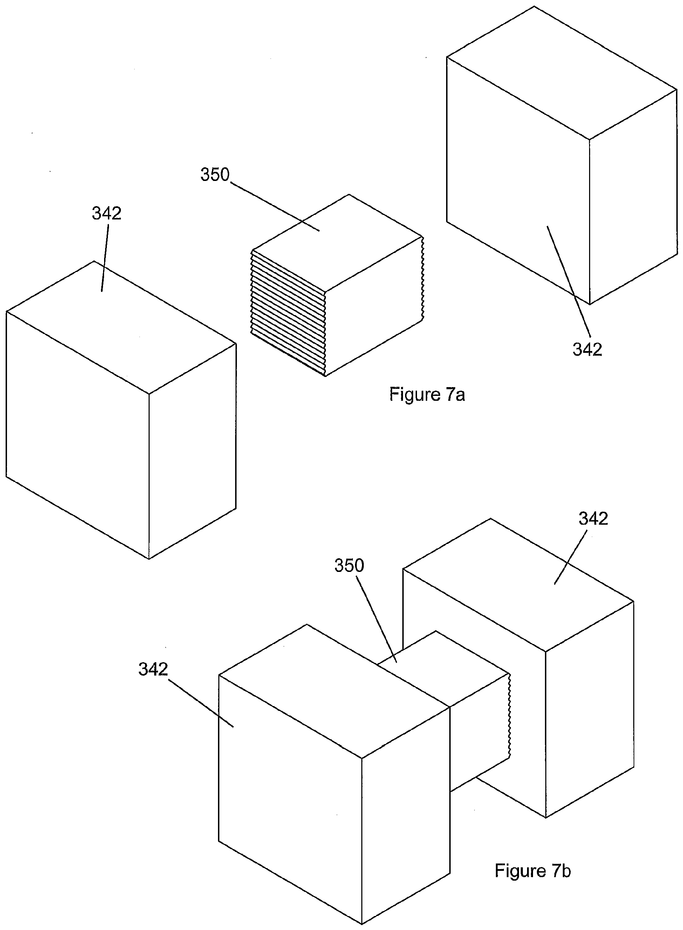

A test block 350 is shown in Figure 6, Figure 7a and Figure 7b. The test block 350 is preferably cuboidal having opposite first and second side surfaces 352, opposite third and fourth side surfaces 354, and opposite first and second end surfaces 356. The first end surface or top end surface 356 of the test block 350 is bounded by a top edge 358 of the test block 350. The top surface 356 of the test block 350 preferably extends between the first and second side surfaces 352 of the test block 350. A plane of the top surface 356 of the test block 350 is preferably substantially perpendicular to the planes of the first and second side surfaces 352. The third and fourth side surfaces 354 of the test block 350 extend between the first and second side surfaces 352, and a plane of each of the third and fourth side surfaces 354 is preferably substantially perpendicular both to the plane of the top surface 356 and to the planes of the first and second side surfaces 352.

These test blocks 350 are preferably made from the same material as at least an outer surface 7 of the inner tubular member 6. Furthermore, the first and second side surfaces 352 of the test block 350 preferably have the same profile or geometry as the outer surface 7 of the inner tubular member 6 (forming one surface of the friction interface 130, 230 described above). The first and second side surfaces 352 may therefore comprise a toothed or a ridged profile. In this way, with the test block 350 clamped or gripped between the gripping plates 342, an interface 360 between each of the first and second side surfaces 352 of the test block 350 and the test faces 346 of the gripping plates 342 is representative of the friction interface 130, 230 between the outer surface 7 of the inner tubular member 6 and the inner surface 122, 222 of the clamping system 110, 210.

Furthermore, the test faces 346 of the gripping plates 342 preferably have the same surface treatment(s) applied to them as the inner surface 122, 222 of the clamping system 110, 210, and the first and second side surfaces 352 of the test block 350 preferably have the same surface treatment(s) applied to them as the outer surface 7 of the inner tubular member 6.

With the test block 350 held between the gripping plates 342, the ram 348 is moved into contact with the top surface or first end surface 356 of the test block 350. In some embodiments, an end region 349 of the ram 348 extends over the edge(s) 358 of the test block 350 and may extend partially over the third and fourth side surfaces 354. The ram 348 is arranged to apply a force or load to the test block 350 in a central position, substantially mid-way between the test faces 346 of the gripping plates 342.

During testing, the platens 341 and gripping plates 342 are moved towards each other to apply a desired contact stress at the interface 360. The test block 350 is mounted in the test rig 340 such that support due to contact stresses at the interface 360 between the first and second side surfaces 352 of the test block 350 and the test faces 346 of the gripping plates 342 is the only resistance to movement of the test block 350 in the test rig 340, i.e. relative movement at this interface 360. The test rig 340 comprises a first sensor to continuously monitor the contact stress at each of the interfaces 360. It is desirable to apply the contact stress uniformly across the area of each of the interfaces 360. Preferably, therefore, the first sensor is configured to measure any variation in contact stress across the areas of the interfaces 360. The first sensor may comprise a force sensor 372 (as shown in Figure 5).

The contact stress applied at the interface 360 is preferably between 10,000 pound-force per square inch (psi) and 25,000 psi (between 68 MPa and 173 MPa).

The force applied to the test block 350 by the ram 348, in a direction parallel to the interface 360, is then slowly or gradually increased. The test rig 340 comprises a second sensor to continuously monitor the applied force or applied load. The second sensor is preferably configured to measure the distribution of the applied load over the top surface 356 of the test block 350.

The test rig 340 preferably comprises means to continuously record data from the first and second sensors.

The test rig 340 further comprises a third sensor that is arranged to detect and continuously monitor relative movement at the interface 360. A movement/displacement sensor 370 may be mounted on the testing rig 340 to monitor any relative movement (as shown in figure 5). The test rig 340 preferably also comprises means to continuously record data from the third sensor. The third sensor is used to determine the point at which slip occurs at the interface 360. It will be appreciated that there are a variety of possible mechanisms by which slip may occur, and there may be small-scale deflections of a part of the test rig 340 during application of the load to the test block 350. Accordingly, it is necessary to define the point of slip using a number of different condition definitions. Whichever of these conditions occurs first during testing, will determine the point of slip for that test block 350.

Point of slip is the first point at which one of these conditions is satisfied:

(i) the applied load parallel to the tested interface 360 reaches a maximum and cannot be increased due to continual slip at the interface 360 under increased load;
(ii) if the interface 360 includes a toothed or ridged surface, the total relative movement at the interface 360 is at least the same as half the pitch of the teeth or ridges; or
(iii) relative movement at the interface 360 occurs suddenly and in an increment greater than a pre-determined threshold value.

The test method or trial is preferably repeated a number of times with a plurality of test blocks 350 (a new test block 350 and gripping plates 342 being used for each trial). The testing blocks 350 and gripping plates 341 are therefore consumables in relation to this system. Preferably the test method or trial is repeated with at least ten test blocks 350. More preferably the test method or trial is repeated with at least twenty test blocks 350. The grip coefficient ($\Phi$) is then calculated from the determined $F_s$ to $F_n$ ratios of all of the trials. The number of repeat trials required is preferably determined by statistical reliability of the calculated grip coefficient ($\Phi$).

The reliability of the calculated grip coefficient ($\Phi$), with an error band of 0.10, is preferably a minimum of 97.5% (i.e. there is a 97.5% probability that the $F_s$ to $F_n$ ratio of any individual trial is greater than the calculated grip coefficient ($\Phi$), less 0.10). To determine whether sufficient trials have been conducted to meet this requirement, the below equation may be utilized, assuming that the data resulting from the trials is normally distributed:

$$n = (\frac{fs}{E})^2$$

where

n = number of trials required
$f$ = factor based on required accuracy
s = standard deviation of the results
$E$ = allowable error band (for example 0.10)

The factor '$f$' is the result of the inverse of the standard normal cumulative distribution function, carried out on the desired reliability. The factor '$f$' is equal to 1.96 for a probability of 97.5% that any given result (the calculated $F_s$ to $F_n$ ratio from a trial) is greater than the calculated grip coefficient ($\Phi$), less the allowable error band. In this example, this is the same as a probability of 95% that any given result is greater than or less than the calculated grip coefficient ($\Phi$), plus or minus the allowable error band.

The grip coefficient ($\Phi$) may be calculated from the obtained data using any statistical method that allows the reliability of the calculated grip coefficient ($\Phi$) to be determined from the statistical parameters of the obtained data. The minimum reliability for such statistical methods is preferably 97.5%.

A first statistical method that may be used to calculate the grip coefficient ($\Phi$) is to calculate the mean of the $F_s$ to $F_n$ ratios determined from all valid trials, minus two standard deviations.

A second statistical method that may be used to calculate the grip coefficient ($\Phi$) is to determine the minimum $F_s$ to $F_n$ ratio determined from all valid trials. Statistical analysis of grip coefficient data has demonstrated that this minimum value closely approximates the value obtained by calculating the mean minus two standard deviations (according to the first statistical method).

It has been shown that the grip coefficient ($\Phi$) for a given interface may be a function of the contact stress at that interface. Furthermore, the relationship between the grip coefficient ($\Phi$) and the contact stress may differ depending on the range of contact stresses considered. Accordingly, any determination of the grip coefficient ($\Phi$) for an interface may be presumed to be valid only over the range of contact stresses tested. Depending on the interface and the range of contact stresses tested, the grip coefficient ($\Phi$) for an interface may be best represented by separate grip coefficients ($\Phi_1, \Phi_2,...$ etc.) over different contact stress ranges.

In some embodiments it has been found that the calculated grip coefficient ($\Phi$) is substantially constant over the range of contact stress between 10,000 psi and 25,000 psi (between 68 MPa and 173 MPa). In other embodiments it has been found that the calculated grip coefficient ($\Phi$) over the range of contact stress between 10,000 psi and 15,000 psi (between 68 MPa and 103 MPa) is different to the calculated grip coefficient ($\Phi$) over the range of contact stress between 15,000 psi and 25,000 psi (between 103 MPa and 173 MPa). Accordingly, it may be beneficial to calculate a first grip coefficient ($\Phi_1$) for a first range of contact stresses applied to the interface 360, and a second grip coefficient ($\Phi_2$) for a second range of contact stresses applied to the interface 360. In yet further embodiments, it may be beneficial to calculate more than two grip coefficients ($\Phi$) over more than two ranges of applied contact stress.

The calculated grip coefficient ($\Phi$) of an interface is dependent on the material properties and geometries of the interfacing components. A large number of factors will have an effect on the grip coefficient ($\Phi$). It will therefore be appreciated that a calculated grip coefficient ($\Phi$) will only be applicable for clamping systems 110, 210 in which the surfaces at the friction interface 130, 230:

- are made of materials having the same specifications as the surfaces at the tested interface 360;
- have the same surface treatments as the surfaces at the tested interface 360;
- have the same hardness as the surfaces at the tested interface 360; and
- have the same interface geometry (including teeth or ridges if present) manufactured to the same nominal dimensions and tolerances as the surfaces at the tested interface 360.

**Claims**

1. A method of determining a grip coefficient at an interface (130, 230) between an inner tubular member (6) and a gripping surface (122, 222) in a wellhead system (2), the wellhead system (2) comprising a clamping arrangement (110, 210) comprising a collar (114, 214) having an externally tapered surface (116, 216), the arrangement (110, 210) also including an annular component (118, 218) with an internally tapered surface (120, 220), the collar (114, 214) and the annular component (118, 218) being relatively moveable between a first position in which the tapered surface (120, 220) of the annular component (118, 218) exerts no radial force on the collar (114, 214) and a second position in which the tapered surface (120, 220) of the annular component (118, 218) exerts sufficient radial force to distort the collar (114, 214) inwardly in order to grip the inner tubular member (6) within the gripping surface (122, 222) and to support a load of the inner tubular member (6), the inner tubular member (6) having an outer surface (7) including a ridged profile, and the method comprising:

    (i) forming a test block (350) having opposite side surfaces (352) including a ridged profile representative of the outer surface (7) of the inner tubular member (6), the test block (350) being made from the same material as at least the outer surface (7) of the inner tubular member (6);
    (ii) gripping the test block (350) between two gripping plates (342) configured to move linearly towards each other and away from each other by applying a gripping force normal to the side surfaces (352) of the test block (350) disposed between the gripping plates (342) so as to form an interface (360) between each of the side surfaces (352) and a test face (346) of a respective one of the gripping plates (342), the test face (346) being made from the same material as at least an inner surface of the gripping surface (122, 222);

(iii) providing a press member (348) at least partially disposed between the two gripping plates (342) and configured to move linearly along an axis perpendicular to the axis of linear movement of the gripping plates (342) and applying a gradually increasing load to the test block (350) in a direction parallel to a plane of the interface (360);

(iv) providing a sensor (370) and continuously monitoring relative movement between the test block (350) and the gripping plate (342) at the interfaces (360);

(v) determining the applied load at which slip between the test block (350) and the gripping plates (342) occurs; and

(vi) determining the grip coefficient by calculating the ratio of the applied load to the gripping force at the time slip occurs;

wherein the method further comprises:

- mounting the press member (348) on an anchor block (390) and securing the anchor block (390) to an anchor plate (391) wherein the anchor block (390) and press member (348) locate at a first end of the gripping plates (342) and the anchor plate (391) is located at a second opposing end of the gripping plates (342);
- securing the anchor block (390) to the anchor plate (391) by anchor rods (392); and
- mounting the anchor block (390) and the anchor plate (391) on rails (393) to aid the relative movement of the anchor block (390) and the anchor plate (391) during an initial set up; and
- fixing the anchor block (390) and the anchor plate (391) to each other to prevent movement of the press member (348) away from the test block (350) during testing.

2. A method according to any preceding claim, wherein the applied load at which slip occurs is the smallest applied load at which one of these conditions is satisfied:

(i) the applied load reaches a maximum and cannot be increased due to continual slip at the interface (360) under increased load;

(ii) the total relative movement at the interface (360) is at least the same as half the pitch of ridges of the ridged profile of the side surfaces (352) of the test block (350); or

(iii) relative movement at the interface (360) occurs suddenly and in an increment greater than a pre-determined threshold value.

3. A method according to any preceding claim, wherein a plurality of tests are conducted by repeating the method steps (i) - (vi) for a plurality of test blocks (350), each of the plurality of test blocks (350) being made of the same material and the side surfaces (352) of each of the test blocks (350) having the same ridged profile and having identical surface treatment and wherein a single grip coefficient is determined from the calculated ratios of the applied load to the gripping force at the time slip occurs for all of the tests.

4. A method according to Claim 3, wherein the grip coefficient is determined by calculating the mean of the calculated ratios of the applied load to the gripping force at the time slip occurs for all of the tests, minus two standard deviations.

5. A method according to Claim 3, wherein the grip coefficient is the minimum of the calculated ratios of the applied load to the gripping force at the time slip occurs for all of the tests.

6. A method according to any preceding claim, further comprising:

- applying a first gripping force such that a contact stress at the interfaces (360) is within a first range of contact stresses;
- determining a first grip coefficient for the first gripping force;
- applying a second gripping force such that a contact stress at the interfaces (360) is within a second range of contact stresses; and
- determining a second grip coefficient for the second gripping force.

7. Apparatus (340) to determine a grip coefficient at an interface (130, 230) between an inner tubular member (6) and a gripping surface (122, 222) in a wellhead system (2), the wellhead system (2) comprising a clamping arrangement (110, 210) comprising a collar (114, 214) having an externally tapered surface (116, 216), the arrangement (110, 210) also including an annular component (118, 218) with an internally tapered surface (120, 220), the collar (114, 214) and the annular component (118, 218) being relatively moveable between a first position in which the tapered surface (120, 220) of the annular component (118, 218) exerts no radial force on the collar

(114, 214) and a second position in which the tapered surface (120, 220) of the annular component (118, 218) exerts sufficient radial force to distort the collar (114, 214) inwardly in order to grip the inner tubular member (6) within the gripping surface (122, 222) and to support a load of the inner tubular member (6), the inner tubular member (6) having an outer surface (7) including a ridged profile, and the apparatus comprising:

- a test block (350) having opposite side surfaces (352) including a ridged profile representative of the outer surface (7) of the inner tubular member (6), the test block (350) being made from the same material as at least the outer surface (7) of the inner tubular member (6);
- a pair of gripping plates (342) configured to move linearly towards each other and away from each other to apply a gripping force normal to the side surfaces (352) of the test block (350) disposed between the gripping plates (342) so as to form an interface (360) between each of the side surfaces (352) and a test face (346) of a respective one of the gripping plates (342), the test face (346) being made from the same material as at least an inner surface of the gripping surface (122, 222);
- a press member (348) at least partially disposed between the two gripping plates (342) and configured to move linearly along an axis perpendicular to the axis of linear movement of the gripping plates (342), so as, in use, to apply a gradually increasing load in a direction parallel to a plane of the interface (360) to an end surface (356) of said test block (350) disposed between the gripping plates (342);
- a sensor (370) arranged to continuously monitor relative movement between said test block (350) and the gripping plates (342) at the interface (360) between one of said side surfaces (352) of the test block (350) and a face (346) of one of the gripping plates (342);
- means to determine the applied load at which slip between the test block (350) and the gripping plates (342) occurs;
- means to determine the grip coefficient by calculating the ratio of the applied load to the gripping force at the time slip occurs;
- the press member (348) is mounted on an anchor block (390) and the anchor block (390) is secured to an anchor plate (391) wherein the anchor block (390) and press member (348) locate at a first end of the gripping plates (342) and the anchor plate (391) is located at a second opposing end of the gripping plates (342);
- the anchor block (390) is secured to the anchor plate (391) by anchor rods (392); and

- the anchor block (390) and the anchor plate (391) are mounted on rails (393) to aid the relative movement of the anchor block (390) and the anchor plate (391) during an initial set up and wherein the anchor block (390) and the anchor plate (391) are fixed to each other to prevent movement of the press member (348) away from the test block (350) during testing.

8. An apparatus (340) according to Claim 7 in which the apparatus (340) comprises a hydraulic mechanism configured to drive movement of one or both of the gripping plates (342), the hydraulic mechanism comprising more than one hydraulic tensioner (345).

9. An apparatus (340) according to Claim 8 which the hydraulic mechanism comprises four linked hydraulic tensioners (345) which are located uniformly around the gripping plates (342).

10. An apparatus (340) according to Claim 9 in which the four linked hydraulic tensioners (345) are concentric with a central axis of movement of the two gripping plates (342).

11. An apparatus (340) according to any one of Claim 7 to Claim 10 in which the apparatus (340) comprises alignment means to align the gripping plates (342) as they are moved towards each other and away from each other, the alignment means comprising a plurality of alignment rods (347), each hydraulic tensioner (345) is mounted on a first platen (341) and the plurality of alignment rods (347) which extend to and are secured to a second platen (341), wherein each hydraulic tensioner (345) includes an alignment rod (347) which restrains and maintains the movement and force produced by the hydraulic tensioners (345) as being linearly across the interface (360) being tested and the two platens (341) are constrained to move in a parallel configuration towards each other.

12. An apparatus (340) according to any one of Claim 7 to Claim 11 in which the press member (348) comprises a ram and the ram is disposed at least partially in the gap (344) between the gripping plates (342) and an end region (349) of the ram extends over the edges (358) of the test block (350) and extends partially over third and fourth side surfaces (354).

13. An apparatus (340) according to any one of Claim 7 to Claim 12 in which
the applied load at which slip occurs is the smallest applied load at which one of these conditions is satisfied:

(i) the applied load reaches a maximum and cannot be increased due to continual slip at the interface (360) under increased load;
(ii) the total relative movement at the interface (360) is at least the same as half the pitch of ridges of the ridged profile of the side surfaces (352) of the test block (350); or
(iii) relative movement at the interface (360) occurs suddenly and in an increment greater than a pre-determined threshold value.

14. A method of constructing a wellhead comprising:

determining a grip coefficient at an interface (130, 230) between an inner tubular member (6) and a gripping surface (122, 222) in the wellhead in accordance with any one of Claim 1 to Claim 6;
constructing the wellhead by selecting a combination of a clamping arrangement (110, 210) and inner tubular member (6) to provide said grip coefficient.

15. A method of constructing a wellhead according to Claim 14 further comprising selecting a material and dimensions for:

the collar (114, 214);
the annular component (118, 218);
the inner tubular member (6); and
the gripping surface (122, 222).

**Patentansprüche**

1. Verfahren zur Bestimmung eines Greifkoeffizienten an einer Grenzfläche (130, 230) zwischen einem inneren rohrförmigen Element (6) und einer Greiffläche (122, 222) in einem Bohrlochkopfsystem (2), wobei das Bohrlochkopfsystem (2) eine Klemmanordnung (110, 210) umfasst, die einen Kragen (114, 214) mit einer sich außen verjüngenden Fläche (116, 216) aufweist, wobei die Anordnung (110, 210) ferner eine ringförmige Komponente (118, 218) mit einer sich innen verjüngenden Fläche (120, 220) umfasst, wobei der Kragen (114, 214) und die ringförmige Komponente (118, 218) relativ zueinander zwischen einer ersten Position, in der die sich verjüngende Fläche (120, 220) der ringförmigen Komponente (118, 218) keine radiale Kraft auf den Kragen (114, 214) ausübt, und einer zweiten Position beweglich sind, in der die sich verjüngende Fläche (120, 220) der ringförmigen Komponente (118, 218) eine hinreichende radiale Kraft ausübt, um den Kragen (114, 214) nach innen zu verformen, um das innere rohrförmige Element (6) innerhalb der Greiffläche (122, 222) zu greifen und eine Last des inneren rohrförmigen Elements (6) zu tragen, wobei das innere rohrförmige Element (6) eine Außenfläche (7) mit einem gerippten Profil aufweist, und wobei das Verfahren umfasst:

(i) Ausbilden eines Prüfblocks (350) mit gegenüberliegenden Seitenflächen (352), die ein geripptes Profil aufweisen, das für die Außenfläche (7) des inneren rohrförmigen Elements (6) repräsentativ ist, wobei der Prüfblock (350) aus demselben Material wie zumindest die Außenfläche (7) des inneren rohrförmigen Elements (6) besteht;
(ii) Einspannen des Prüfblocks (350) zwischen zwei Greifplatten (342), die so ausgelegt sind, dass sie sich durch Aufbringen einer Greifkraft senkrecht zu den zwischen den Greifplatten (342) angeordneten Seitenflächen (352) des Prüfblocks (350) linear aufeinander zu und voneinander weg bewegen, sodass zwischen jeder der Seitenflächen (352) und einer Prüffläche (346) einer jeweiligen Greifplatte (342) eine Grenzfläche (360) gebildet wird, wobei die Prüffläche (346) aus demselben Material wie zumindest eine Innenfläche der Greiffläche (122, 222) besteht;
(iii) Bereitstellen eines Druckelements (348), das zumindest teilweise zwischen den beiden Greifplatten (342) angeordnet und so ausgelegt ist, dass es sich linear entlang einer Achse bewegt, die senkrecht zur Achse der linearen Bewegung der Greifplatten (342) verläuft, und Aufbringen einer allmählich zunehmenden Last auf den Prüfblock (350) in einer Richtung parallel zu einer Ebene der Grenzfläche (360);
(iv) Bereitstellen eines Sensors (370) und kontinuierliches Überwachen der Relativbewegung zwischen dem Prüfblock (350) und der Greifplatte (342) an den Grenzflächen (360);
(v) Bestimmen der aufgebrachten Last, bei der eine Gleitbewegung zwischen dem Prüfblock (350) und den Greifplatten (342) auftritt; und
(vi) Bestimmen des Greifkoeffizienten durch Berechnung des Verhältnisses der aufgebrachten Last zur Greifkraft zum Zeitpunkt des Auftretens der Gleitbewegung; wobei das Verfahren ferner Folgends umfasst:

- Montieren des Druckelements (348) an einem Ankerblock (390) und Befestigen des Ankerblocks (390) an einer Ankerplatte (391), wobei sich der Ankerblock (390) und das Druckelement (348) an einem ersten Ende der Greifplatten (342) befinden und die Ankerplatte (391) an einem gegenüberliegenden zweiten Ende der Greifplatten (342) angeordnet ist;
- Befestigen des Ankerblocks (390) an der Ankerplatte (391) mittels Ankerstangen (392); und
- Montieren des Ankerblocks (390) und der Ankerplatte (391) auf Schienen (393), um die Relativbewegung des Ankerblocks (390) und der Ankerplatte (391) während einer anfänglichen Einrichtung zu erleichtern; und

- Fixieren des Ankerblocks (390) und der Ankerplatte (391) aneinander, um während der Prüfung eine Bewegung des Druckelements (348) vom Prüfblock (350) weg zu verhindern.

2. Verfahren nach einem vorigen Anspruch,
bei welchem die aufgebrachte Last, bei der eine Gleitbewegung auftritt, die kleinste aufgebrachte Last ist, bei der eine der folgenden Bedingungen erfüllt ist:

(i) die aufgebrachte Last erreicht ein Maximum und kann aufgrund der fortlaufenden Gleitbewegung an der Grenzfläche (360) unter erhöhter Last nicht weiter erhöht werden;

(ii) die gesamte Relativbewegung an der Grenzfläche (360) entspricht mindestens dem halben Abstand zwischen den Rippen des gerippten Profils der Seitenflächen (352) des Prüfblocks (350); oder

(iii) die Relativbewegung an der Grenzfläche (360) tritt plötzlich und bei einer Erhöhung auf, die größer als ein vorbestimmter Schwellenwert ist.

3. Verfahren nach einem der vorigen Ansprüche,
bei welchem eine Mehrzahl von Prüfungen durchgeführt wird, indem die Verfahrensschritte (i)-(vi) für eine Mehrzahl von Prüfblöcken (350) wiederholt werden, wobei jeder der Prüfblöcke (350) aus demselben Material besteht und die Seitenflächen (352) jedes der Prüfblöcke (350) dasselbe gerippte Profil und dieselbe Oberflächenbehandlung aufweisen, und wobei ein einzelner Greifkoeffizient aus den berechneten Verhältnissen der aufgebrachten Last zur Greifkraft zum Zeitpunkt des Auftretens der Gleitbewegung für alle Prüfungen bestimmt wird.

4. Verfahren nach Anspruch 3,
bei welchem der Greifkoeffizient durch Berechnung des Mittelwerts der berechneten Verhältnisse der aufgebrachten Last zur Greifkraft zum Zeitpunkt des Auftretens der Gleitbewegung für alle Prüfungen abzüglich zweier Standardabweichungen bestimmt wird.

5. Verfahren nach Anspruch 3,
bei welchem der Greifkoeffizient das Minimum der berechneten Verhältnisse der aufgebrachten Last zur Greifkraft zum Zeitpunkt des Auftretens der Gleitbewegung für alle Prüfungen ist.

6. Verfahren nach einem der vorigen Ansprüche, ferner umfassend:

- Aufbringen einer ersten Greifkraft, sodass eine Kontaktspannung an den Grenzflächen (360) innerhalb eines ersten Kontaktspannungsbereichs liegt;
- Bestimmen eines ersten Greifkoeffizienten für die erste Greifkraft;
- Aufbringen einer zweiten Greifkraft, sodass eine Kontaktspannung an den Grenzflächen (360) innerhalb eines zweiten Kontaktspannungsbereichs liegt; und
- Bestimmen eines zweiten Greifkoeffizienten für die zweite Greifkraft.

7. Vorrichtung (340) zur Bestimmung eines Greifkoeffizienten an einer Grenzfläche (130, 230) zwischen einem inneren rohrförmigen Element (6) und einer Greiffläche (122, 222) in einem Bohrlochkopfsystem (2), wobei das Bohrlochkopfsystem (2) eine Klemmanordnung (110, 210) umfasst, die einen Kragen (114, 214) mit einer sich nach außen verjüngenden Fläche (116, 216) aufweist, wobei die Anordnung (110, 210) ferner eine ringförmige Komponente (118, 218) mit einer sich innen verjüngenden Fläche (120, 220) umfasst, wobei der Kragen (114, 214) und die ringförmige Komponente (118, 218) relativ zueinander zwischen einer ersten Position, in der die sich verjüngende Fläche (120, 220) der ringförmigen Komponente (118, 218) keine radiale Kraft auf den Kragen (114, 214) ausübt, und einer zweiten Position beweglich sind, in der die sich verjüngende Fläche (120, 220) der ringförmigen Komponente (118, 218) eine ausreichende radiale Kraft ausübt, um den Kragen (114, 214) nach innen zu verformen, um das innere rohrförmige Element (6) innerhalb der Greiffläche (122, 222) zu greifen und eine Last des inneren rohrförmigen Elements (6) zu tragen, wobei das innere rohrförmige Element (6) eine Außenfläche (7) mit einem gerippten Profil aufweist, und wobei die Vorrichtung Folgendes umfasst:

- einen Prüfblock (350) mit gegenüberliegenden Seitenflächen (352), die ein geripptes Profil aufweisen, das für die Außenfläche (7) des inneren rohrförmigen Elements (6) repräsentativ ist, wobei der Prüfblock (350) aus demselben Material wie zumindest die Außenfläche (7) des inneren rohrförmigen Elements (6) besteht;
- ein Paar Greifplatten (342), die so ausgelegt sind, dass sie sich linear aufeinander zu und voneinander weg bewegen, um eine Greifkraft senkrecht zu den zwischen den Greifplatten (342) angeordneten Seitenflächen (352) des Prüfblocks (350) aufzubringen, sodass zwischen jeder der Seitenflächen (352) und einer Prüffläche (346) einer jeweiligen Greifplatte (342) eine Grenzfläche (360) gebildet wird, wobei die Prüffläche (346) aus demselben Material wie zumindest eine Innenfläche der Greiffläche (122, 222) besteht;

- ein Druckelement (348), das zumindest teilweise zwischen den beiden Greifplatten (342) angeordnet ist und so ausgelegt ist, dass es sich linear entlang einer Achse bewegt, die senkrecht zur Achse der linearen Bewegung der Greifplatten (342) verläuft, um im Betrieb eine allmählich zunehmende Last in einer Richtung parallel zu einer Ebene der Grenzfläche (360) auf eine Endfläche (356) des zwischen den Greifplatten (342) angeordneten Prüfblocks (350) aufzubringen;

- einen Sensor (370), der so angeordnet ist, dass er die Relativbewegung zwischen dem Prüfblock (350) und den Greifplatten (342) an der Grenzfläche (360) zwischen einer der Seitenflächen (352) des Prüfblocks (350) und einer Fläche (346) einer der Greifplatten (342) kontinuierlich überwacht;

- Mittel zum Bestimmen der aufgebrachten Last, bei der eine Gleitbewegung zwischen dem Prüfblock (350) und den Greifplatten (342) auftritt;

- Mittel zum Bestimmen des Greifkoeffizienten durch Berechnung des Verhältnisses der aufgebrachten Last zur Greifkraft zum Zeitpunkt des Auftretens der Gleitbewegung;

wobei das Druckelement (348) an einem Ankerblock (390) angebracht ist und der Ankerblock (390) an einer Ankerplatte (391) befestigt ist, wobei sich der Ankerblock (390) und das Druckelement (348) an einem ersten Ende der Greifplatten (342) befinden und die Ankerplatte (391) an einem gegenüberliegenden zweiten Ende der Greifplatten (342) angeordnet ist;

wobei der Ankerblock (390) mittels Ankerstangen (392) an der Ankerplatte (391) befestigt ist; und

wobei der Ankerblock (390) und die Ankerplatte (391) auf Schienen (393) montiert sind, um die Relativbewegung des Ankerblocks (390) und der Ankerplatte (391) während einer anfänglichen Einrichtung zu erleichtern, und wobei der Ankerblock (390) und die Ankerplatte (391) aneinander fixiert sind, um während der Prüfung eine Bewegung des Druckelements (348) vom Prüfblock (350) weg zu verhindern.

8. Vorrichtung (340) nach Anspruch 7, bei welcher die Vorrichtung (340) einen hydraulischen Mechanismus umfasst, der dazu eingerichtet ist, die Bewegung einer oder beider Greifplatten (342) anzutreiben, wobei der hydraulische Mechanismus mehr als eine hydraulische Spanneinrichtung (345) umfasst.

9. Vorrichtung (340) nach Anspruch 8, bei welcher der hydraulische Mechanismus vier gekoppelte hydraulische Spanneinrichtungen (345) umfasst, die gleichmäßig um die Greifplatten (342) herum angeordnet sind.

10. Vorrichtung (340) nach Anspruch 9, bei welcher die vier gekoppelten hydraulischen Spanneinrichtungen (345) konzentrisch zu einer zentralen Bewegungsachse der beiden Greifplatten (342) angeordnet sind.

11. Vorrichtung (340) nach einem der Ansprüche 7 bis 10, bei welcher die Vorrichtung (340) Ausrichtmittel umfasst, um die Greifplatten (342) auszurichten, während sie aufeinander zu und voneinander weg bewegt werden, wobei die Ausrichtmittel eine Mehrzahl von Ausricht-stangen (347) umfassen, wobei jede hydraulische Spann-einrichtung (345) an einer ersten Platte (341) montiert ist und die Mehrzahl von Ausrichtstangen (347) sich zu einer zweiten Platte (341) erstreckt und an dieser befestigt ist, wobei jede hydraulische Spanneinrichtung (345) eine Ausrichtstange (347) enthält, die die durch die hydraulischen Spanneinrichtungen (345) erzeugte Bewegung und Kraft so begrenzt und aufrechterhält, dass sie linear über die zu prüfende Grenzfläche (360) verläuft, und die beiden Platten (341) gezwungen sind, sich in paralleler Konfiguration aufeinander zu zu bewegen.

12. Vorrichtung (340) nach einem der Ansprüche 7 bis 11, bei welcher das Druckelement (348) einen Stempel umfasst und der Stempel zumindest teilweise im Spalt (344) zwischen den Greifplatten (342) angeordnet ist und ein Endbereich (349) des Stempels über die Kanten (358) des Prüfblocks (350) hinausragt und sich teilweise über dritte und vierte Seitenflächen (354) erstreckt.

13. Vorrichtung (340) nach einem der Ansprüche 7 bis 12, bei der die aufgebrachte Last, bei der eine Gleitbewegung auftritt, die kleinste aufgebrachte Last ist, bei der eine der folgenden Bedingungen erfüllt ist:

(i) die aufgebrachte Last erreicht ein Maximum und kann aufgrund fortlaufender Gleitbewegung an der Grenzfläche (360) bei erhöhter Last nicht weiter erhöht werden;

(ii) die gesamte Relativbewegung an der Grenzfläche (360) entspricht mindestens dem halben Abstand zwischen den Rippen des gerippten Profils der Seitenflächen (352) des Prüfblocks (350); oder

(iii) die Relativbewegung an der Grenzfläche (360) tritt plötzlich und mit einer Erhöhung auf, die größer als ein vorbestimmter Schwellenwert ist.

**14.** Verfahren zum Konstruieren eines Bohrlochkopfs, umfassend:

Bestimmen eines Greifkoeffizienten an einer Grenzfläche (130, 230) zwischen einem inneren rohrförmigen Element (6) und einer Greiffläche (122, 222) im Bohrlochkopf gemäß einem der Ansprüche 1 bis 6;

Konstruieren des Bohrlochkopfs durch Auswahl einer Kombination aus einer Klemmanordnung (110, 210) und einem inneren rohrförmigen Element (6), um den genannten Greifkoeffizienten bereitzustellen.

**15.** Verfahren zum Konstruieren eines Bohrlochkopfs nach Anspruch 14,

ferner umfassend das Auswählen eines Materials und von Abmessungen für:

den Kragen (114, 214);
die ringförmige Komponente (118, 218);
das innere rohrförmige Element (6); und
die Greiffläche (122, 222).

## Revendications

**1.** Procédé de détermination d'un coefficient de prise à une interface (130, 230) entre un élément tubulaire intérieur (6) et une surface de préhension (122, 222) dans un système de tête de puits (2), le système de tête de puits (2) comprenant un agencement de bridage (110, 210) comprenant un collier (114, 214) ayant une surface conique extérieurement (116, 216), l'agencement (110, 210) incluant également un composant annulaire (118, 218) avec une surface conique intérieurement (120, 220), le collier (114, 214) et le composant annulaire (118, 218) étant mobiles relativement entre une première position dans laquelle la surface conique (120, 220) du composant annulaire (118, 218) n'exerce aucune force radiale sur le collier (114, 214) et une seconde position dans laquelle la surface conique (120, 220) du composant annulaire (118, 218) exerce une force radiale suffisante pour déformer le collier (114, 214) vers l'intérieur afin de saisir l'élément tubulaire intérieur (6) au sein de la surface de préhension (122, 222) et de supporter une charge de l'élément tubulaire intérieur (6), l'élément tubulaire intérieur (6) ayant une surface extérieure (7) incluant un profil strié, et le procédé comprenant:

(i) la formation d'un bloc d'essai (350) ayant des surfaces latérales opposées (352) incluant un profil strié représentatif de la surface extérieure (7) de l'élément tubulaire intérieur (6), le bloc d'essai (350) étant réalisé dans le même matériau qu'au moins la surface extérieure (7) de l'élément tubulaire intérieur (6);

(ii) la préhension du bloc d'essai (350) entre deux plaques de préhension (342) configurées pour se déplacer linéairement l'une vers l'autre et s'éloigner l'une de l'autre par application d'une force de préhension normale aux surfaces latérales (352) du bloc d'essai (350) disposé entre les plaques de préhension (342) de manière à former une interface (360) entre chacune des surfaces latérales (352) et une face d'essai (346) de l'une respective des plaques de préhension (342), la face d'essai (346) étant constituée du même matériau qu'au moins une surface intérieure de la surface de préhension (122, 222);

(iii) la mise en place d'un élément de presse (348) disposé au moins partiellement entre les deux plaques de préhension (342) et configuré pour se déplacer linéairement le long d'un axe perpendiculaire à l'axe de mouvement linéaire des plaques de préhension (342) et l'application d'une charge progressivement croissante sur le bloc d'essai (350) dans une direction parallèle à un plan de l'interface (360);

(iv) la mise en place d'un capteur (370) et la surveillance continue du mouvement relatif entre le bloc d'essai (350) et la plaque de préhension (342) au niveau des interfaces (360);

(v) la détermination de la charge appliquée à laquelle un glissement se produit entre le bloc d'essai (350) et les plaques de préhension (342); et

(vi) la détermination du coefficient de prise par le calcul du rapport de la charge appliquée à la force de préhension au moment où un glissement se produit;

dans lequel le procédé comprend en outre:

- le montage de l'élément de presse (348) sur un bloc d'ancrage (390) et la fixation du bloc d'ancrage (390) à une plaque d'ancrage (391) dans lequel le bloc d'ancrage (390) et l'élément de presse (348) sont situés à une première extrémité des plaques de préhension (342) et la plaque d'ancrage (391) est située à une seconde extrémité opposée des plaques de préhension (342);

- la fixation du bloc d'ancrage (390) à la plaque d'ancrage (391) par des tiges d'ancrage (392); et

- le montage du bloc d'ancrage (390) et de la plaque d'ancrage (391) sur des rails (393) afin de faciliter le mouvement relatif du bloc d'ancrage (390) et de la plaque d'ancrage (391) lors d'une mise en place initiale; et

- la fixation du bloc d'ancrage (390) et de la plaque d'ancrage (391) l'un à l'autre pour empêcher un mouvement de l'élément de presse (348) en s'éloignant du bloc d'essai (350) pendant l'essai.

2. Procédé selon l'une quelconque des revendications précédentes, dans lequel la charge appliquée à laquelle un glissement se produit est la plus petite charge appliquée pour laquelle l'une de ces conditions est satisfaite:

> (i) la charge appliquée atteint un maximum et ne peut pas être augmentée en raison d'un glissement continu à l'interface (360) sous charge croissante;
> (ii) le mouvement relatif total à l'interface (360) est au moins égal à la moitié du pas des stries du profil strié des surfaces latérales (352) du bloc d'essai (350); ou
> (iii) le mouvement relatif à l'interface (360) se produit soudainement et en un incrément supérieur à une valeur seuil prédéterminée.

3. Procédé selon l'une quelconque des revendications précédentes, dans lequel une pluralité d'essais sont effectués en répétant les étapes (i) à (vi) pour une pluralité de blocs d'essai (350), chacun de la pluralité de blocs d'essai (350) étant constitué du même matériau et les surfaces latérales (352) de chacun des blocs d'essai (350) ayant le même profil strié et ayant un traitement de surface identique et dans lequel un coefficient de prise unique est déterminé à partir des rapports calculés de la charge appliquée à la force de préhension au moment où un glissement se produit pour tous les essais.

4. Procédé selon la revendication 3, dans lequel le coefficient de prise est déterminé en calculant la moyenne des rapports calculés de la charge appliquée à la force de préhension au moment où un glissement se produit pour tous les essais, moins deux écarts-types.

5. Procédé selon la revendication 3, dans lequel le coefficient de prise est le minimum des rapports calculés de la charge appliquée à la force de préhension au moment où un glissement se produit pour tous les essais.

6. Procédé selon l'une quelconque des revendications précédentes, comprenant en outre:

> - l'application d'une première force de préhension telle qu'une contrainte de contact aux interfaces (360) est dans une première plage de contraintes de contact;
> - la détermination d'un premier coefficient de prise pour la première force de préhension;
> - l'application d'une seconde force de préhension telle qu'une contrainte de contact aux interfaces (360) est dans une seconde plage de contraintes de contact; et
> - la détermination d'un second coefficient de prise pour la seconde force de préhension.

7. Appareil (340) pour déterminer un coefficient de prise à une interface (130, 230) entre un élément tubulaire intérieur (6) et une surface de préhension (122, 222) dans un système de tête de puits (2), le système de tête de puits (2) comprenant un agencement de bridage (110, 210) comprenant un collier (114, 214) ayant une surface conique extérieurement (116, 216), l'agencement (110, 210) incluant également un composant annulaire (118, 218) avec une surface conique intérieurement (120, 220), le collier (114, 214) et le composant annulaire (118, 218) étant mobiles relativement entre une première position dans laquelle la surface conique (120, 220) du composant annulaire (118, 218) n'exerce aucune force radiale sur le collier (114, 214) et une seconde position dans laquelle la surface conique (120, 220) du composant annulaire (118, 218) exerce une force radiale suffisante pour déformer le collier (114, 214) vers l'intérieur afin de saisir l'élément tubulaire intérieur (6) au sein de la surface de préhension (122, 222) et de supporter une charge de l'élément tubulaire intérieur (6), l'élément tubulaire intérieur (6) ayant une surface extérieure (7) incluant un profil strié, et l'appareil comprenant:

> - un bloc d'essai (350) ayant des surfaces latérales opposées (352) incluant un profil strié représentatif de la surface extérieure (7) de l'élément tubulaire intérieur (6), le bloc d'essai (350) étant constitué par le même matériau qu'au moins la surface extérieure (7) de l'élément tubulaire intérieur (6);
> - une paire de plaques de préhension (342) configurées pour se déplacer linéairement l'une vers l'autre et s'éloigner l'une de l'autre pour appliquer une force de préhension normale aux surfaces latérales (352) du bloc d'essai (350) disposé entre les plaques de préhension (342) de manière à former une interface (360) entre chacune des surfaces latérales (352) et une face d'essai (346) de l'une respective des plaques de préhension (342), la face d'essai (346) étant constituée du même matériau qu'au moins une surface intérieure de la surface de préhension (122, 222);
> - un élément de presse (348) disposé au moins partiellement entre les deux plaques de préhension (342) et configuré pour se déplacer linéairement le long d'un axe perpendiculaire à l'axe de mouvement linéaire des plaques de préhension (342) de manière à appliquer, lors de l'utilisation, une charge progressivement croissante dans une direction parallèle à un plan de l'interface (360) à une surface d'extrémité (356) dudit bloc d'essai (350) disposé entre les plaques de préhension (342);

- un capteur (370) disposé pour surveiller de manière continue le mouvement relatif entre ledit bloc d'essai (350) et les plaques de préhension (342) à l'interface (360) entre l'une desdites surfaces latérales (352) du bloc d'essai (350) et une face (346) de l'une des plaques de préhension (342);

- des moyens pour déterminer la charge appliquée à laquelle un glissement se produit entre le bloc d'essai (350) et les plaques de préhension (342);

- des moyens pour déterminer le coefficient de prise en calculant le rapport de la charge appliquée à la force de préhension au moment où le glissement se produit;

- l'élément de presse (348) est monté sur un bloc d'ancrage (390) et le bloc d'ancrage (390) est fixé à une plaque d'ancrage (391) dans lequel le bloc d'ancrage (390) et l'élément de presse (348) sont situés à une première extrémité des plaques de préhension (342) et la plaque d'ancrage (391) est située à une seconde extrémité opposée des plaques de préhension (342);

- le bloc d'ancrage (390) est fixé à la plaque d'ancrage (391) par des tiges d'ancrage (392); et

- le bloc d'ancrage (390) et de la plaque d'ancrage (391) sont montés sur des rails (393) afin de faciliter le mouvement relatif du bloc d'ancrage (390) et de la plaque d'ancrage (391) lors d'une mise en place initiale et dans lequel le bloc d'ancrage (390) et la plaque d'ancrage (391) sont fixés l'un à l'autre pour empêcher un mouvement de l'élément de presse (348) en s'éloignant du bloc d'essai (350) pendant l'essai.

8. Appareil (340) selon la revendication 7, dans lequel l'appareil (340) comprend un mécanisme hydraulique configuré pour entraîner le mouvement d'une ou des deux plaques de préhension (342), le mécanisme hydraulique comprenant plus d'un tendeur hydraulique (345).

9. Appareil (340) selon la revendication 8, dans lequel le mécanisme hydraulique comprend quatre tendeurs hydrauliques liés (345) qui sont situés uniformément autour des plaques de préhension (342).

10. Appareil (340) selon la revendication 9, dans lequel les quatre tendeurs hydrauliques liés (345) sont concentriques à un axe central de mouvement des deux plaques de préhension (342).

11. Appareil (340) selon l'une quelconque de la revendication 7 à la revendication 10, dans lequel l'appareil (340) comprend des moyens d'alignement pour aligner les plaques de préhension (342) lorsqu'elles sont rapprochées l'une vers l'autre et éloignées l'une de l'autre, les moyens d'alignement comprenant une pluralité de tiges d'alignement (347), chaque tendeur hydraulique (345) est monté sur un premier plateau (341) et la pluralité de tiges d'alignement (347) qui s'étendent jusqu'à et sont fixées à un second plateau (341), dans lequel chaque tendeur hydraulique (345) inclut une tige d'alignement (347) qui limite et maintient le mouvement et la force produits par les tendeurs hydrauliques (345) linéairement sur l'interface (360) qui est testée et les deux plateaux (341) sont contraints de se déplacer dans une configuration parallèle l'un vers l'autre.

12. Appareil (340) selon l'une quelconque de la revendication 7 à la revendication 11, dans lequel l'élément de presse (348) comprend un piston et le piston est disposé au moins partiellement dans l'espace (344) entre les plaques de préhension (342) et une région d'extrémité (349) du piston s'étend sur les bords (358) du bloc d'essai (350) et s'étend partiellement sur des troisième et quatrième surfaces latérales (354).

13. Appareil (340) selon l'une quelconque de la revendication 7 à la revendication 12, dans lequel la charge appliquée à laquelle un glissement se produit est la plus petite charge appliquée pour laquelle l'une de ces conditions est satisfaite:

(i) la charge appliquée atteint un maximum et ne peut pas être augmentée en raison d'un glissement continu à l'interface (360) sous une charge accrue;
(ii) le mouvement relatif total à l'interface (360) est au moins égal à la moitié du pas des stries du profil strié des surfaces latérales (352) du bloc d'essai (350); ou
(iii) le mouvement relatif à l'interface (360) se produit brusquement et en un incrément supérieur à une valeur seuil prédéterminée.

14. Procédé de construction d'une tête de puits comprenant:

la détermination d'un coefficient de prise à une interface (130, 230) entre un élément tubulaire intérieur (6) et une surface de préhension (122, 222) dans la tête de puits selon l'une quelconque de la revendication 1 à la revendication 6;
la construction de la tête de puits par sélection d'une combinaison d'un agencement de bridage (110, 210) et d'un élément tubulaire intérieur (6) pour obtenir ledit coefficient de prise.

**15.** Procédé de construction d'une tête de puits selon la revendication 14, comprenant en outre la sélection d'un matériau et de dimensions pour:

le collier (114, 214);
le composant annulaire (118, 218);
l'élément tubulaire intérieur (6); et
la surface de préhension (122, 222).

Figure 1

118

7

120

122

114

4

110

116

10

6

Figure 2a

118

7

130

120

122

114

4

116

110

10

6

Figure 2b

Figure 3

Figure 4a

Figure 4b

Figure 5

Figure 6

350

342

342

Figure 7a

342

350

342

Figure 7b

Figure 8a

Figure 8b

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **BRENT HARRALD**. *Friction Grip in Wellheads: An Innovative Approach to Load Support & Sealing*, December 2009